(19) Europäisches Patentamt

European Patent Office

Office européen des brevets

(11) Veröffentlichungsnummer: **0 447 007 A1**

# (12) EUROPÄISCHE PATENTANMELDUNG

(21) Anmeldenummer: **91250018.8**

(22) Anmeldetag: **29.01.91**

(51) Int. Cl.5: **B23P 19/04**

(30) Priorität: **13.03.90 DE 4008389**
**25.05.90 DE 4017290**

(43) Veröffentlichungstag der Anmeldung:
**18.09.91 Patentblatt 91/38**

(84) Benannte Vertragsstaaten:
**AT DE ES FR GB IT SE**

(71) Anmelder: **LSW Maschinenfabrik GmbH**
**Uhthoffstrasse 1**

**W-2820 Bremen 70(DE)**

(72) Erfinder: **Schneller, Christof Emanuel**
**Braut-Eichen-Strasse 9**
**W-2820 Bremen 70(DE)**

(74) Vertreter: **Goddar, Heinz J., Dr.**
**FORRESTER & BOEHMERT**
**Widenmayerstrasse 4/I**
**W-8000 München 22(DE)**

(54) **Verfahren zum Einsetzen von geteilten Ventilkeilen und Vorrichtung zum Durchführen des Verfahrens.**

�ហ Ein Verfahren zum Einsetzen von geteilten Ventilkeilen (5) in Federteller von Ventilen unter formschlüssiger Verbindung und einem Ventilschaft (9), bei dem die Ventilkeile aus einer Ausgangsposition aus einem Magazin (3,4) entnommen werden, die Ventilkeile in eine Ebene in Höhe der Montagestellung abgesenkt werden, spätestens vor dem Erreichen der Montagestellung der Federteller (8) so weit niedergedrückt werden, daß das Ende des Ventilschaftes zumindest mit einem der Ventilkeillänge entsprechenden Abschnitt aus dem Federteller herausragt, die Ventilkeile in einer gegenüber der Magazinebene niedrigeren Ebene radial an den Ventilschaft angesetzt werden, und anschließend der Federteller wieder in seine Ruhelage bewegt wird, ist dadurch gekennzeichnet, daß die Ventilkeile horizontal liegend dem Magazin entnommen und unter Drehung um 90° in die Montagestellung gebracht werden. Die Vorrichtung zum Durchführen des Verfahrens weist Greifarme (1,2) zum Transportieren je eines Ventilkeiles von der Ausgangsstellung in die Montagestellung und mit einem Niederhalter (6) für die Ventilfeder, welcher parallel zur Achse des Ventilschaftes verschiebbar ist, auf und ist dadurch gekennzeichnet, daß die Greifarme um die Achse senkrecht zur Achse des Ventilschaftes schwenkbar sind.

Fig.1

Die Erfindung betrifft ein Verfahren zum Einsetzen von geteilten Ventilkeilen in Federteller von Ventilen unter formschlüssiger Verbindung mit einem Ventilschaft gemäß dem Oberbegriff von Anspruch 1 sowie einer Vorrichtung zum Durchführen des Verfahrens gemäß dem Oberbegriff von Anspruch 3.

Bei einer automatischen Ventilkeilmontage werden die Ventilkeile horizontal liegend auf einer Zuführeinrichtung wie beispielsweise einem Förderband an die eigentliche Montagevorrichtung herangeführt und dann einem Magazin zur Zwischenlagerung zugeführt.

Aus der DE-OS 34 11 441 sind ein Verfahren und eine Vorrichtung zum Einsetzen von geteilten Ventilkeilen bekannt. Das Montagegerät besitzt Greifarme, welche Ventilkeile durch Saugluft ergreifen und halten und in eine Montageposition bringen. Die Ventilkeile werden dabei paarweise einem Magazin entnommen, in das sie von der oben erwähnten Zuführeinrichtung geladen werden, indem sie aus der horizontalen Lage in eine vertikale Lage gebracht werden, was duch bogenförmige Schienen geschieht, so daß sie im Magazin einander gegenüberliegend und übereinander um eine Zentrierstange angeordnet sind. Ein Niederhalter, der als Platte mit mittiger Ausnehmung ausgebildet ist, drückt so auf den Federteller, daß der Ventilschaft aus dem Federteller heraus durch die mittige Ausnehmung ragt. Hierbei ist es erforderlich, das Ventil selbst zum Ventilteller abzustützen, um den Ventilkörper stationär zu halten. Dazu ist ein stützender Stößel vorgesehen. Bei dieser bekannten Vorrichtung werden die Ventilkeile zur Montage längs einer Bogenlinie von der Ausgangsstellung in die Montagestellung am Ventilschaft überführt, was zu Schwierigkeiten bei der paßgenauen Montage führen kann. Daher sind Kontrolleinrichtungen vorgesehen, die die Positionierung der Ventilkeile sowohl an den Greifarmen als auch am Ventilschaft überwachen. Außerdem ist die Anordnung wenig kompakt, da der Niederhalter bei der bekannten Vorrichtung um die gesamte Ventilanordnung herumgreifen muß, und zusätzliche Einrichtungen, wie beispielsweise der Stößel, sind notwendig, um die Stabilität der Anordnung sicherzustellen.

Es ist daher die Aufgabe der vorliegenden Erfindung, das bekannte Verfahren und die bekannte Vorrichtung so zu verbessern, daß die Positionierung der Ventilkeile genauer als bisher möglich vorgenommen werden kann, wobei eine Einrichtung zum Laden der Ventilkeile in ein Magazin nicht mehr erforderlich sein soll.

Diese Aufgabe wird von einem Verfahren mit den Merkmalen des Kennzeichens von Anspruch 1 gelöst. Eine Vorrichtung zum Durchführen des Verfahrens ist Gegenstand des Anspruchs 3. Vorteilhafte Ausgestaltungen der Erfindung ergeben sich aus den Merkmalen der jeweiligen Unteransprüche.

Beim neuen Verfahren werden die Ventilkeile horizontal liegend aus einem Magazin entnommen und in eine Ebene in Höhe der Montagestelle abgesenkt, wobei spätestens vor Erreichen der Montagestellung der Federteller so weit niedergedrückt wird, daß das Ende des Ventilschaftes zumindest mit einem der Ventilkeillänge entsprechenden Abschnitt aus dem Federteller herausragt, worauf die Ventilkeile nach Beenden einer Schwenkbewegung um 90° in die Montagestellung gebracht werden und in einer gegenüber der Magazinebene niedrigeren Ebene radial an den Ventilschaft angesetzt werden und wobei daran anschließend der Federteller wieder in seine Ruhelage bewegt wird.

Es ist also nicht mehr notwendig, die Ventilkeile in eine Vertikallage zu bringen, so daß eine entsprechende Einrichtung nicht vorzusehen ist.

Bei der erfindungsgemäßen Vorrichtung zum Einsetzen von geteilten Ventilkeilen sind Greifarme zum Transportieren je eines Ventilkeiles von der Ausgangsstellung in die Montagestellung vorgesehen, wobei die Greifarme um eine Achse senkrecht zur Achse des Ventilschaftes schwenkbar sind, sowie ein Niederhalter für die Ventilfeder, welcher parallel zur Achse des Ventilschaftes verschiebbar ist.

Erfindungsgemäß werden die Ventilkeile durch eine genau definierte Schwenkbewegung aus der Ausgangsposition in die Montageposition überführt. Es sind keinerlei zusätzliche Einrichtungen erforderlich, die das maßgenaue Ansetzen der Ventilkeile überprüfen.

Bevorzugt ist es, wenn die Greifarme nach dem Entnehmen eines Ventilkeiles zunächst in vertikaler Richtung angehoben und dann um einen Winkel kleiner als 90° eingeschwenkt werden. Dieses ist vorteilhaft, wenn man ein stationäres Magazin verwenden will, da auf diese Weise die Greifarme mit den Ventilkeilen beim Absenken einfach an der Entnahmeposition vorbeigeführt werden können.

Im folgenden soll die Erfindung lediglich beispielhaft anhand der Zeichnung näher beschrieben werden. Es zeigt:

Fig. 1 eine Schemaansicht der erfindungsgemäßen Vorrichtung beim Entnehmen eines Ventilkeiles aus einem Magazin,

Fig. 1a eine Darstellung, aus der die Funktionsweise des Schwenkmechanismus der Greifarme hervorgeht,

Fig. 2 eine Gesamtansicht der erfindungsgemäßen Vorrichtung im Längsschnitt, und

Fig. 3 eine Detailansicht des Niederhalters für die erfindungsgemäße Vorrichtung.

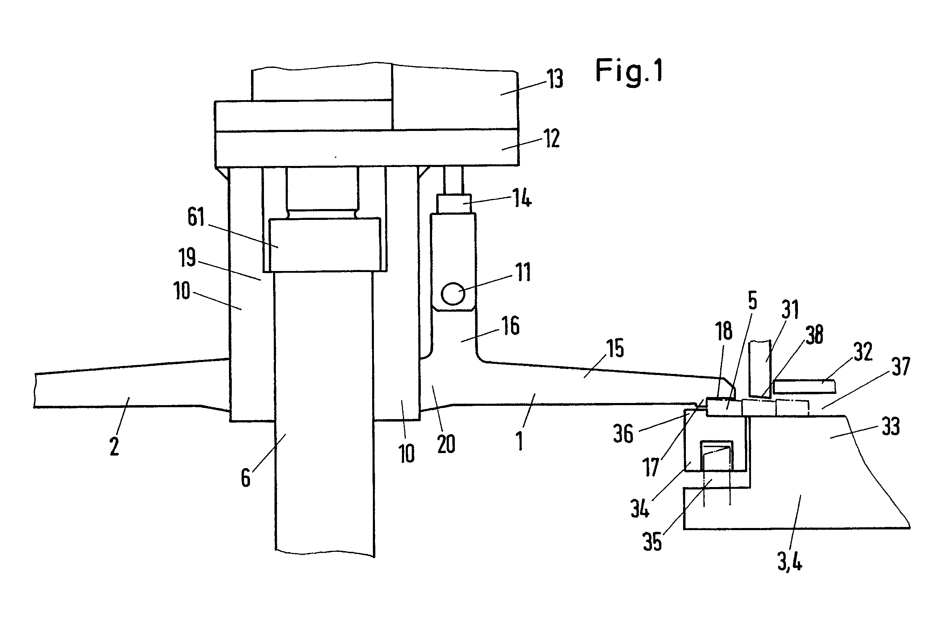

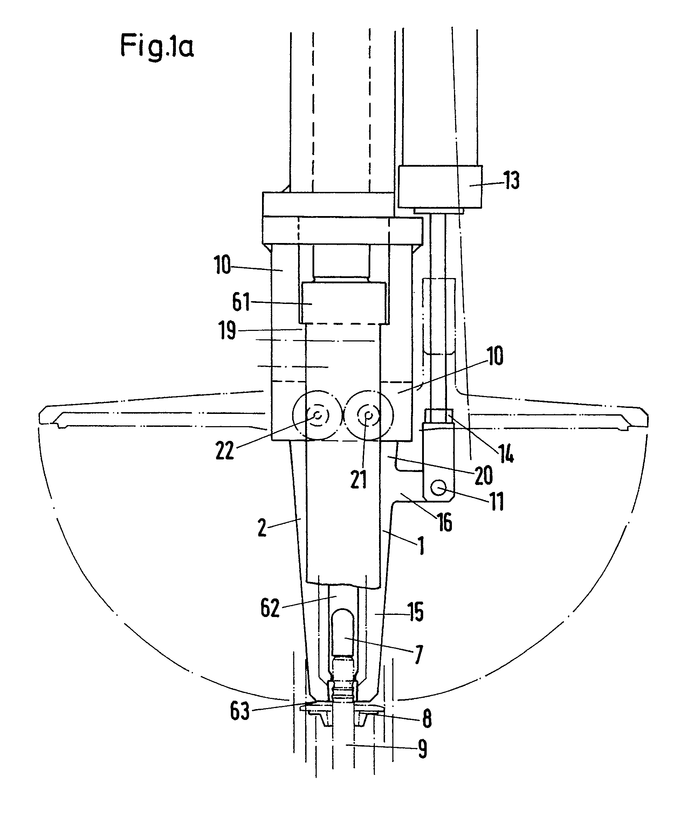

Fig. 1 zeigt eine Teilansicht der erfindungsgemäßen Vorrichtung zum Einsetzen von geteilten Ventilkeilen. Die Vorrichtung weist zwei Greifarme 1, 2 auf, von denen hier nur derin Blickrichtung rechts angeordnete Greifarm 1 dargestellt ist. Die Beschreibung im Zusammenhang mit diesem Greifarm 1 ist analog auf den in Blickrichtung links angeordneten Greifarm 2 zu übertragen. Der Greifarm 1 ist an einer Rahmenvorrichtung 10 angebracht, welcher an ihrem oberen Ende mit einer Trägerplatte 12 abschließt. Auf der Trägerplatte 12 ist ein Gehäuse 13 vorgesehen, in welchem Antriebsvorrichtungen und Zuleitungen untergebracht sind. Von der Trägerplatte 12 her erstreckt sich eine Getriebevorrichtung 14 mit einer Welle 11, mit welcher der Greifarm 1 um einen gewünschten Winkel um die Wellenachse geschwenkt werden kann. Der Greifarm 1 besteht im wesentlichen aus einem langgestreckten Heber 15, an dessen Oberkante sich in der Nähe der Rahmenvorrichtung 10 ein sich nach oben erstreckender Vorsprung 16 befindet, der über die Welle 11 mit der Getriebevorrichtung 14 verbunden ist.

Als Getriebevorrichtung 14 kann ein pneumatisches Getriebe eingesetzt werden, wobei die dazu notwendigen Druckluftleitungen ebenfalls durch das Gehäuse 13 geführt werden.

Der Heber 15 kann an der Rahmenvorrichtung 10 ungehindert gleiten und stützt sich mit seinem zur Rahmenvorrichtung 10 weisenden rückwärtigen Endabschnitt 20 an dieser ab. Dadurch wird gewährleistet, daß sich der Heber 15 in genau horizontaler Lage befindet und immer korrekt in bezug auf die herangeführten Ventilkeile 5 positioniert ist. Sein anderes Ende ist an der Unterkante entsprechend dem aufzunehmenden Ventilkeil 5 ausgeformt. Dazu ist am äußersten Ende des Hebers 15 an dessen Unterkante eine Ausnehmung 18 vorgesehen, welche in einem nasenartigen Vorsprung 17 abschließt, so daß das vordere Ende des horizontal liegenden Ventilkeils in der Entnahmeposition mit diesem nasenartigen Vorsprung 17 abschließt. Die Ausnehmung 18 kann eine an eine Druckluftleitung angeschlossene Öffnung aufweisen, so daß der Ventilkeil 15 in der Ausnehmung 18 festgehalten wird, wenn in der Druckleitung Unterdruck herrscht.

Die Ventilkeile 5 werden in Magazinen 3, 4 zwischengelagert, wobei in Fig. 1 wiederum nur das in Blickrichtung rechts liegende Magazin 3 gezeigt ist. Die Ausführungen gelten aber entsprechend auch für das in Blickrichtung links liegende Magazin 4. Das Magazin 3 weist einen Sockel 33 auf, das mit der Oberseite eines Blockierstückes 34 fluchtet. Das Blockierstück 34 weist einen Vorsprung 36 auf, dessen rückwärtige Kante mit der rückwärtigen Kante des nasenartigen Vorsprungs 17 des Hebers 15 abschließt.

Ein zu entnehmender Ventilkeil 5 liegt also mit seiner Frontfläche sowohl am Vorsprung 17 als auch am Vorsprung 36 an. Das Blockierstück 34 ist mit Hilfe einer Feder 35 oder dergleichen nach unten überfahrbar, wenn der Greifarm 1 auf dem zu entnehmenden Ventilkeil 5 auftrifft. Zwischen dem Sockel 33 und einer Abdeckplatte 32 ist ein Zuführkanal 37 ausgebildet, durch den die Ventilkeile 5 horizontal liegend nacheinander der Entnahmestelle zugeführt werden. Das Sortieren bzw. Trennen der einzelnen Ventilkeile 4 wird durch einen Trennstab 31 besorgt, dessen Unterkante 38 entsprechend des äußeren konischen Mantels des Ventilkeiles ausgeformt ist. Der Trennstab 31 ist steuerbar anzuheben und abzusenken. Wenn der Trennstab 31 sich in seiner abgesenkten Position befindet, liegt er auf dem Außenmantel desjenigen Ventilkeiles an, der dem zu entnehmenden am nächsten ist. Der im Zuführkanal 37 an dritter Stelle liegende Ventilkeil stößt mit seiner Frontfläche an die abgeschrägte Unterseite 38 des Trennstabes und wird somit in seiner Bewegung blockiert. Erst wenn der Trennstab 31 angehoben wird, wird dem Ventilkeil der Weg freigegeben, und er kann in die nächste Position vorwärts bewegt werden.

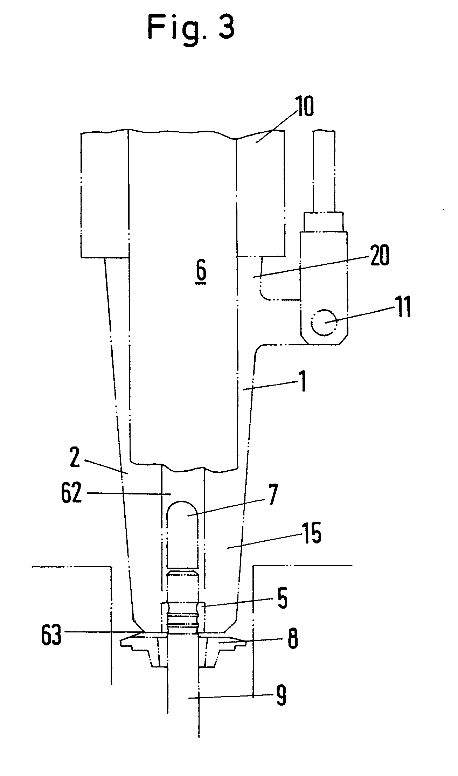

Die Rahmenvorrichtung 10 ist im wesentlichen zylindrisch ausgebildet. An der Innenwand des Zylinders befindet sich eine Stufe 19, auf der ein ringförmiger Flansch 61 eines Niederhalters 6 aufliegt. Die Funktion des Niederhalters 6 wird im Zusammenhang mit Fig. 3 näher beschrieben.

Fig. 1a zeigt den Schwenkmechanismus für die Greifarme 1, 2. In der Rahmenvorrichtung 10 sind Schwenkachsen 21, 22 vorgesehen, um die die Greifarme 1, 2 aus der Entnahmeposition in die Montageposition verschwenkt werden. Für die behinderungsfreie Bewegung der Greifarme 1, 2 sind in der Rahmenvorrichtung 10 Ausnehmungen (nicht dargestellt) ausgebildet.

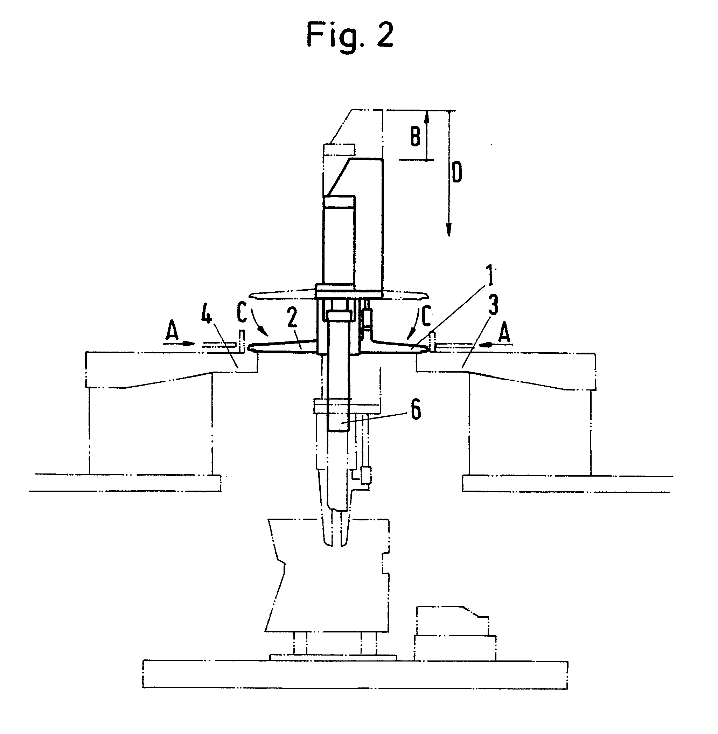

Die Funktion der Vorrichtung wird im Zusammenhang mit Fig. 2 beschrieben. Aus den Magazinen 3, 4 werden in Richtung der Pfeile A Ventilkeile so in die Entnahmeposition geführt, daß sie von den Greifarmen 1, 2 aufgenommen werden können. Aus dieser Entnahme- oder Ausgangsposition werden die Greifarme 1, 2 in Richtung des Pfeils B um eine bestimmte Strecke angehoben. Die Greifarme 1, 2 in der angehobenen Position sind durch strichpunktierte Linien angedeutet. Sodann werden die Greifarme 1, 2 in Richtung der Pfeile C um einen bestimmten Winkelbetrag zueinander verschwenkt. Dadurch wird erreicht, daß beim nachfolgenden Absenken der Montagevorrichtung in Richtung des Pfeiles D die Greifarme 1, 2 an den Magazinen 3, 4 vorbeigeführt werden. Der Betrag des Schwenkwinkels wird entsprechend gewählt und kann beispielsweise zwischen 80° und 85° betragen. In der erreichten Zwischenstellung werden die Greifarme 1, 2 in die Montagestellung abgesenkt. Es ist ein Niederhalter 6 in die Vorrichtung integriert, welcher der Absenkbewegung der Greifarme 1, 2 voreilt und den Federteller niederhält. Dadurch ragt das Ende des Ventilschaftes hervor, an dem die Ventilkeile montiert werden sollen. Der Ventilteller wird, falls erforderlich, abgestützt, so daß der Ventilschaft in einer stabilen Lage gehalten ist. Die Greifarme 1, 2 schwenken dann in die Montagestellung ein, bei der sie im wesentlichen parallel zur Achse des Ventilschaftes gestellt sind, wobei der rückwärtige Endabschnitt 20 jeweils an der Unterkante der Rahmenvorrichtung 10 anliegt, wodurch diese Position genau definiert ist. Die Ventilkeile werden in dieser Stellung an den Ventilschaft angelegt. Die Montagestellung der Greifarme 1, 2 ist wiederum durch strichpunktierte Linien dargestellt.

Durch gesteuertes Zurückfahren des Niederhalters und Anheben der Greifarme 1, 2 in die Ausgangsstellung schiebt sich der Federteller über die Ventilkeile und hält diese fest. Wenn die Ausgangsstellung erreicht ist, werden die Greifarme 1, 2 aus der Vertikallage in die Horizontallage zurückgeschwenkt, und der Vorgang kann sich wiederholen.

In der Fig. 3 ist der Niederhalter 6 für den Ventilteller 8 im Detail dargestellt. Die Abbildung zeigt die Greifarme 1, 2 in der Montageposition für die Ventilkeile 5. Der Niederhalter 6 ist in die Vorrichtung integriert. Der Niederhalter 6 ist ein im wesentlichen zylinderförmiger Körper, der in seinen äußeren Abmessungen so gewählt ist, daß er bei der Absenkbewegung auf dem Federteller 8 aufliegt. Da er der Absenkbewegung der Greifarme 1, 2 voreilt, ragt das äußere Ende des Ventilschaftes 9, auf dem die Ventilkeile 5 montiert werden sollen, über den Federteller 8 hinaus, wenn die Greifarme 1, 2 die Montagestellung erreicht haben. In den Niederhalter 6, der im wesentlichen aus zwei Stößeln mit kreisabschnittförmigem Querschnitt und dazwischenliegendem spaltförmigen Hohlraum 62 besteht, welcher sich in Längsrichtung des Niederhalters 6 und axialsymmetrisch mit diesem erstreckt, werden die Greifarme 1, 2 zum Ansetzen der Ventilkeile 5 geschwenkt. Der zylindrische Hohlraum 62 mündet in der unteren Begrenzungsfläche 63 des Niederhalters 6 und fluchtet mit dem Ventilschaft 9. Bei der Absenkbewegung des Niederhalters 6 wird der Ventilschaft 9 im Hohlraum 62 aufgenommen. Ein Begrenzungsstück 7, das maßbezogen zum Ventilschaft 9 in dem Hohlraum 62 integriert ist, dient als mechanischer Anschlag. Dieser Anschlag kann sowohl als Festanschlag als auch als gefederter Anschlag ausgebildet sein. In beiden Fällen wird hierdurch gewährleistet, daß auch die Montagestellung des Ventilschaftes 9 mit größter Genauigkeit erreicht wird.

Die in der voranstehenden Beschreibung, in der Zeichnung sowie in den Ansprüchen offenbarten Merkmale der Erfindung können sowohl einzeln als auch in beliebiger Kombination für die Verwirklichung der Erfindung in ihren verschiedenen Ausführungsformen wesentlich sein.

## Patentansprüche

1. Verfahren zum Einsetzen von geteilten Ventilkeilen in Federteller von Ventilen unter formschlüssiger Verbindung und einem Ventilschaft, bei dem

   a) die Ventilkeile aus einer Ausgangsposition aus einem Magazin entnommen werden,

   b) die Ventilkeile in eine Ebene in Höhe der Montagestellung abgesenkt werden,

   c) spätestens vordem Erreichen der Montagestellung der Federteller so weit niedergedrückt wird, daß das Ende des Ventilschaftes zumindest mit einem der Ventilkeillänge entsprechenden Abschnitt aus dem Federteller herausragt,

   d) die Ventilkeile in einer gegenüber der Magazinebene niedrigeren Ebene radial an den Ventilschaft angesetzt werden, und

   e) anschließend der Federteller wieder in seine Ruhelage bewegt wird,

   **dadurch gekennzeichnet, daß**

   f) die Ventilkeile horizontal liegend dem Magazin entnommen und

   g) unter Drehung um 90° in die Montagestellung gebracht werden.

2. Verfahren nach Anspruch 1,
   dadurch gekennzeichnet,
   daß die Ventilkeile nach dem Entnehmen aus dem Magazin zunächst angehoben und um einen Winkel kleiner als 90° eingeschwenkt werden, bevor sie in eine Ebene in Höhe der Montagestellung abgesenkt werden.

3. Vorrichtung zum Einsetzen von geteilten Ventilkeilen in Federteller von Ventilen unter formschlüssiger Verbindung mit einem Ventilschaft, insbesondere zum Durchführen des Verfahrens nach Anspruch 1 oder 2, mit Greifarmen zum Transportieren je eines Ventilkeiles von der Ausgangsstellung in die Montagestellung und mit einem Niederhalter für die Ventilfeder, welcher parallel zur Achse des Ventilschaftes verschiebbar ist,
   **dadurch gekennzeichnet,**
   daß die Greifarme (1, 2) um eine Achse senkrecht zur Achse des Ventilschaftes (9) schwenkbar sind.

4. Vorrichtung nach Anspruch 3,
   dadurch gekennzeichnet,
   daß die Greifarme (1, 2) aus der Ausgangsstellung in vertikaler Richtung anhebbar sind.

5. Vorrichtung nach Anspruch 3 oder 4,
dadurch gekennzeichnet,
daß ein Niederhalter (6) integriert ist.

6. Vorrichtung nach einem der Ansprüche 3 bis 5,
dadurch gekennzeichnet,
daß der Niederhalter (6) einen Hohlraum (62) zum Aufnehmen des Ventilschaftes (9) und zum Einfahren der Greifarme (1, 2) aufweist.

7. Vorrichtung nach Anspruch 6,
dadurch gekennzeichnet,
daß der Hohlraum (62) ein Begrenzungsstück (7) für den Tiefenanschlag des Ventilschaftes (9) enthält.

Fig.1

Fig.1a

# Fig. 2

# Fig. 3

Europäisches
Patentamt

# EUROPÄISCHER
# RECHERCHENBERICHT

Nummer der Anmeldung

**EP 91 25 0018**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| P,X,A | DE-A-4 002 822 (KUKA)<br>* Spalte 4, Zeilen 38 - 48 *<br>– – – | 3,1 | B 23 P 19/04 |
| A,D | DE-A-3 411 441 (KRAUSE)<br>– – – – – | 1,3 | |

|  |
|---|
| RECHERCHIERTE SACHGEBIETE (Int. Cl.5) |
| B 23 P<br>B 25 B |

Der vorliegende Recherchenbericht wurde für alle Patentansprüche erstellt

| Recherchenort | Abschlußdatum der Recherche | Prüfer |
|---|---|---|
| Den Haag | 10 Juni 91 | RIS M. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

&: Mitglied der gleichen Patentfamilie, übereinstimmendes Dokument